Europäisches Patentamt

European Patent Office

Office européen des brevets

(19)

(11) Numéro de publication : 0 049 205
B1

# FASCICULE DE BREVET EUROPÉEN

(12)

(45) Date de publication du fascicule du brevet :
28.08.85

(51) Int. Cl.⁴ : **B 29 C 63/02**

(21) Numéro de dépôt : **81401507.9**

(22) Date de dépôt : **30.09.81**

(54) Assemblage d'une bande sans fin sur une nappe transportée en continu.

(30) Priorité : 30.09.80 DE 3036816

(43) Date de publication de la demande :
07.04.82 Bulletin 82/14

(45) Mention de la délivrance du brevet :
28.08.85 Bulletin 85/35

(84) Etats contractants désignés :
AT BE CH DE FR GB IT LI LU NL SE

(56) Documents cités :
CH-A- 419 765
DE-A- 2 534 622
DE-A- 2 907 927
DE-B- 1 263 440
FR-A- 2 352 742

(73) Titulaire : ISOVER SAINT-GOBAIN
Les Miroirs 18, avenue d'Alsace
F-92400 Courbevoie (FR)

(72) Inventeur : Kaufmann, Friedrich
Trifelsring 37
D-6703 Limburgerhof (DE)
Inventeur : Schlossherr, Horst-Werner
Ostpreussenring 9
D-6830 Schwetzingen (DE)
Inventeur : Zinn, Egon
Heerstrasse 9
D-6701 Meckenheim (DE)

(74) Mandataire : Eudes, Marcel et al
Saint-Gobain Recherche 39 Quai Lucien Lefranc
F-93304 Aubervilliers Cedex (FR)

## Description

L'invention concerne un procédé pour réunir une bande sans fin sous tension à une nappe de matière transportée en continu sur une voie, en particulier une nappe d'un feutre de fibres minérales.

Le problème se pose souvent d'amener de façon continue une bande sans fin telle qu'une bande de doublage sur une matière en nappe de façon à l'y appliquer, par exemple pour l'y coller. Un exemple réside dans la fabrication de feutre de fibres minérales doublé, où l'on assemble en continu une nappe de fibres, au fur et à mesure de son élaboration, avec une bande de doublage, pour livrer un produit composite.

Il arrive fréquemment qu'on ne puisse faire agir sur la matière au point d'assemblage une force de traction suffisante pour permettre d'appliquer par son intermédiaire à la bande sans fin les forces de traction nécessaires pour dérouler et faire avancer cette dernière, soit que la matière ne puisse transmettre que des forces traction réduites voire nulles, soit que son entraînement du poste de déroulement au point d'assemblage exige des forces de traction relativement grandes. Dans l'exemple mentionné de la fabrication d'un feutre de fibres minérales doublé, les deux faits se conjuguent fréquemment : le feutre de fibres minérales ne peut transmettre que des forces de traction limitées, et il en faut d'appréciables pour faire passer la bande de doublage par les postes d'application d'adhésif, de séchage préparatoire et éventuellement aussi par le poste de pliage où ses marges sont par exemple repliées à 180° ce qui exige de la guider raidie sous tension.

Si donc la force de transport agissant sur la nappe au point d'assemblage ne suffit pas à elle seule à entraîner jusque là la bande sans fin, il faut appliquer à cette dernière un entraînement auxiliaire quelconque pour lui communiquer les forces de traction supplémentaires voulues. Il est connu, comme par exemple selon CH-A-419 765, d'y pourvoir à l'aide de rouleaux entraînés, en prise sur ses deux faces à la fois pour engendrer par pression le frottement nécessaire à la traction. Toutefois, de telles paires de rouleaux d'entraînement n'ont qu'un emploi limité et, par exemple, on ne peut plus les utiliser lorsqu'une face de la bande sans fin est déjà revêtue d'adhésif ou que, pour d'autres raisons, elle ne peut être exposée à aucun contact. Il ne reste alors qu'à prévoir une paire correspondante de rouleaux ou des organes similaires en aval du point d'assemblage, en un lieu où la face de la bande à protéger du contact est déjà revêtue, pour appliquer à travers la nappe la pression nécessaire au fonctionnement d'un rouleau d'entraînement s'appliquant sur la face extérieure de la bande. Outre le fait d'aboutir à perturber les forces de transport agissant sur la matière de sorte que la maîtrise du processus nécessite des mesures de commande et de réglage coûteuses, cela suppose que la nappe puisse transmettre sans dommage des forces de compression suffisantes ce qui n'est souvent vrai qu'en partie, par exemple dans le cas des feutres de fibres minérales.

Dans la mesure où l'on ne prévoit qu'un seul rouleau d'entraînement, sur le côté qui doit se trouver par la suite à l'extérieur de la bande sans fin, les forces de traction transmissibles à la bande sans fin sont faibles, et fréquemment trop faibles, même si l'on choisit avantageusement le coefficient de frottement entre la bande et la surface du rouleau d'entraînement.

A cet égard, on connaît un procédé ainsi qu'un appareil avec lesquels, en touchant un seul côté de la bande sans fin, on conduit la bande sans fin contre une surface de transport permettant le passage de l'air, à l'arrière de laquelle on engendre une dépression et qui se meut dans le sens de transport de la bande sans fin. C'est ainsi que selon DE-A-2 907 927 la surface de transport se déplace de façon synchrone avec la bande sans fin, sa vitesse d'avancement devant correspondre à celle de la nappe de matière à doubler. En outre la boite d'aspiration qui engendre la dépression est en position fixe et la dépression qu'elle engendre sert à maintenir la bande sans fin de doublage contre la surface de transport.

On connaît en outre d'après FR-A-2 352 742, un système de convoyeur de carton ondulé comprenant une pluralité de courroies de convoyeur perforées montées sur une caisse aspirante et capables d'amener une bande de carton ondulé dans un dispositif de coupe et de l'en évacuer sans risque de glissement ou de déformation de la bande ou encore d'écrasement des ondulations du carton.

L'emploi d'une surface mobile de transport permettant le passage de l'air, sous forme de courroie transporteuse par exemple, à l'arrière de laquelle agit une dépression et sur laquelle la bande sans fin repose dans la zone de transport, permet d'appliquer cette bande contre sa face avant avec une force qui dépend de la dépression et qu'il est donc, au besoin, très facile de régler. Ainsi, la surface de transport peut transmettre à la bande sans fin, par son mouvement, des forces de traction de grandeur presque illimitée avant que cette bande ne soit réunie à la matière; on peut donc lui appliquer toute traction nécessaire pour surmonter la force de freinage au poste de déroulement et pour la faire passer par d'autres postes de traitement ainsi que pour la tendre fortement : le brin de la bande sans fin qui se trouve dans la région du point de jonction peut ainsi être soulagé des tractions pour arriver sous une faible tension au poste d'amenée afin d'y être appliqué contre la matière. Il est facile de commander les forces agissant sur la bande de façon à ne lui transmettre la force de transport de la nappe que dans une mesure propre à éviter qu'elle ne prenne une flèche excessive entre l'extrémité de la surface de transport et le point de jonction. Mais on peut aussi, éventuellement, faire arriver la surface de transport jusque dans la région du point de jonction, de sorte que les forces de traction à appliquer par la matière à la bande sans fin deviennent nulles ou presque, même si, en amont de la surface de transport, cette bande subit des tractions appréciables. La transmission des forces de la surface de transport ou courroie transporteuse à la bande sans fin s'effectue de façon répartie sur la surface, donc ménagée, de sorte que tout dommage est exclu.

Il est possible de régler la dépression à un niveau suffisant pour qu'il ne se produise plus de mouvements relatifs entre la surface de transport et la bande sans fin, donc que celle-ci soit dans une certaine mesure transportée de façon positive. Ainsi, on peut parvenir à ce que la bande entre dans la région d'amenée de façon particulièrement douce et avec extrêmement peu de tension, mais, par contre, la régulation de vitesse de la surface de transport ou courroie transporteuse et par là de la bande est particulièrement critique puisqu'une décélération de cette dernière engendrerait immédiatement une tension tandis qu'une accélération provoquerait des plis.

Pour éviter cela l'invention prévoit que l'assemblage de la matière en nappe et de la bande sans fin est effectué en mettant en œuvre conjointement ou séparément les mesures suivantes :

— on règle la dépression à une valeur qui permet un glissement entre la surface de transport et la bande sans fin tel que la vitesse de la surface de transport soit supérieure à la vitesse de transport de la nappe de matière, donc aussi à celle désirée pour la bande sans fin, à condition de laisser patiner celle-ci, en adoptant une dépression réduite en conséquence. Ce cas exige toujours au point de jonction certaines forces de traction qui doivent être transmises par la matière à la bande sans fin mais qui sont de grandeur relativement réduite. Toutes les forces de traction qu'il faut éviter de transmettre de la matière à la bande sont introduites en complément dans cette dernière par la surface de transport ou courroie transporteuse qui tourne en patinant dans le sens de transport. L'avantage ainsi obtenu est de réduire à son minimum la précision à exiger de la régulation puisque, en raison du patinage, la surface de transport ne transmet par frottement à la bande sans fin qu'une force de traction supplémentaire, toujours pratiquement égale, qu'il n'est pas nécessaire de régler avec précision tandis que c'est la matière en mouvement qui lui transmet la force résiduelle nécessaire dans chaque cas pour que sa vitesse s'adapte à celle de la nappe. On peut, au besoin, régler la dépression servant à obtenir le patinage désiré, par exemple à partir de la tension de la bande sans fin en amont du point de jonction, mesurée par exemple d'après sa flèche, de sorte que l'on peut éviter à coup sûr en pareil cas une traction excessive ;

— on peut aussi solliciter élastiquement la surface de transport à la fois contre le sens de transport de la bande sans fin et contre la pression de celle-ci, de sorte que le brin de celle-ci qui va de l'extrémité aval de la surface de transport au point de jonction est toujours sollicité par cette force élastique et elle seule, et que les différences de vitesse puissent être compensées par des mouvements correspondants de la surface de transport le long de la direction de transport. Il s'effectue ainsi un ajustement précis et rapide de la vitesse de la bande à celle de la nappe tandis que la variation de position que subit alors la surface de transport permet d'obtenir un ordre de commande qui réajuste la vitesse de transport de la bande pour éliminer la déviation élastique qui s'est produite.

Il est vrai que, par la publication de brevet DE-A-2 243 586 il est déjà connu en soi de prévoir, sur le parcours d'une bande sans fin entre son poste de déroulement et son point de réunion à une autre bande qu'il s'agit de doubler, une boîte d'aspiration qui l'attire. Toutefois, il s'agit d'une boîte d'aspiration fixe, le long de laquelle la bande défile et qui a pour seule fonction d'aplanir ses ondulations. Ainsi, cette boîte d'aspiration exerce sur la bande une force agissant à l'encontre du sens de transport tandis que, selon l'invention, la surface de transport mobile ou courroie transporteuse, derrière laquelle est disposée une boîte d'aspiration, entraîne la bande dans le sens de transport, pour favoriser son transport et non pas en l'entravant.

D'autre part, il est vrai que, par le brevet US-A-3 830 489, il est en soi connu d'utiliser, pour transporter de la matière, une courroie transporteuse tournante perméable à l'air et comportant une zone de transport où elle passe devant les ouvertures d'une boîte d'aspiration. Toutefois, ici, en ce qui concerne la matière à transporter, il s'agit de feuilles à retirer une par une d'une pile et que l'organe de transport aspire à peu près transversalement à son plan avant de les transporter latéralement hors de la région de la pile pour laisser d'autres transporteurs les reprendre. Les difficultés décrites, relatives à la réunion d'une bande sans fin et d'une matière en nappe se déplaçant par exemple dans une chaîne de production, ne se posent pas ici ; en particulier, aucune force de traction n'est introduite dans une bande de façon définie et sans contact bilatéral.

D'autres détails, développements, particularités et avantages de l'invention résultent de la description ci-après d'un mode d'exécution, en référence aux dessins.

la figure 1 montre, en coupe partielle, une élévation latérale d'un appareil selon l'invention pour assembler une bande sans fin à la face inférieure d'une nappe de matière en cours de transport ;

les figures 1a, 1b, 1c, sont des vues de détail ;

la figure 2 montre, également en coupe partielle, une élévation frontale d'une partie de l'appareil selon la figure 1, dans la direction II ;

la figure 2a est un détail de la région IIa de la figure 2, avec un espacement réduit des bandes au stade du doublage ;

la figure 2b est une vue analogue à celle de la figure 2a, dans la position d'utilisation du produit fini.

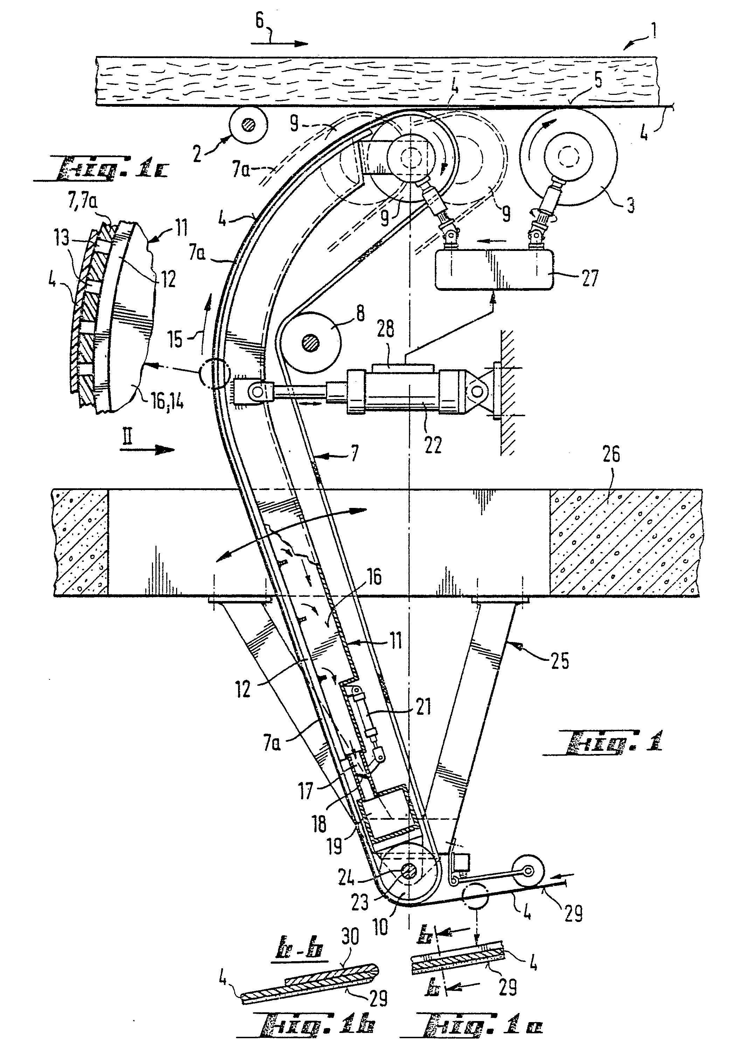

Le dessin montre en 1 une nappe de matière transportée sur un train de rouleaux 2, dans le cas de l'exemple un feutre de fibres minérales venant de la chaîne de production. Le transport de la nappe de matière 1 s'effectue au moyen d'un mécanisme schématisé sous forme du rouleau entraîné 3 d'un train de rouleaux de plus grand diamètre. Le train de rouleaux 2 ménage dans la région représentée sur la figure 1 un passage à travers lequel une bande sans fin 4, dans le cas de l'exemple une bande de doublage, est amenée sur la face inférieure de la nappe de matière 1 pour y être appliquée. Le point de jonction désigné par 5 se trouve à la partie supérieure du rouleau 3 qui fait suite au passage dans le sens de transport de la matière, selon la flèche 6.

On prélève la bande sans fin 4, de façon non représentée plus précisément, sur un poste de déroulement équipé d'un frein; on applique, sur sa face avant ou face inférieure qui vient en haut au point 5, une couche d'adhésif 29 (figures 1a ; 1b) que l'on soumet à un séchage préparatoire ; on peut admettre en outre, dans le cas de l'exemple, que la bande sans fin 4 est relativement plus large que la largeur ultérieure d'application sur la matière 1 et que les marges 30 ainsi formées doivent être repliées vers l'intérieur avant le point d'amenée 5 (figure 1b) pour se trouver rabattues, après son entrée en contact avec la face inférieure de la nappe de matière 1, contre la face postérieure ainsi restée libre de la bande 4 ; lors de l'utilisation du produit ainsi doublé, on pourra les rabattre vers l'extérieur afin de s'en servir pour le fixer.

En particulier lorsqu'on replie les bandes marginales sur le parcours du poste de déroulement au point de réunion 5, il faut que la bande 4 soit maintenue sous une forte tension, ce qui nécessite des forces de traction non négligeables.

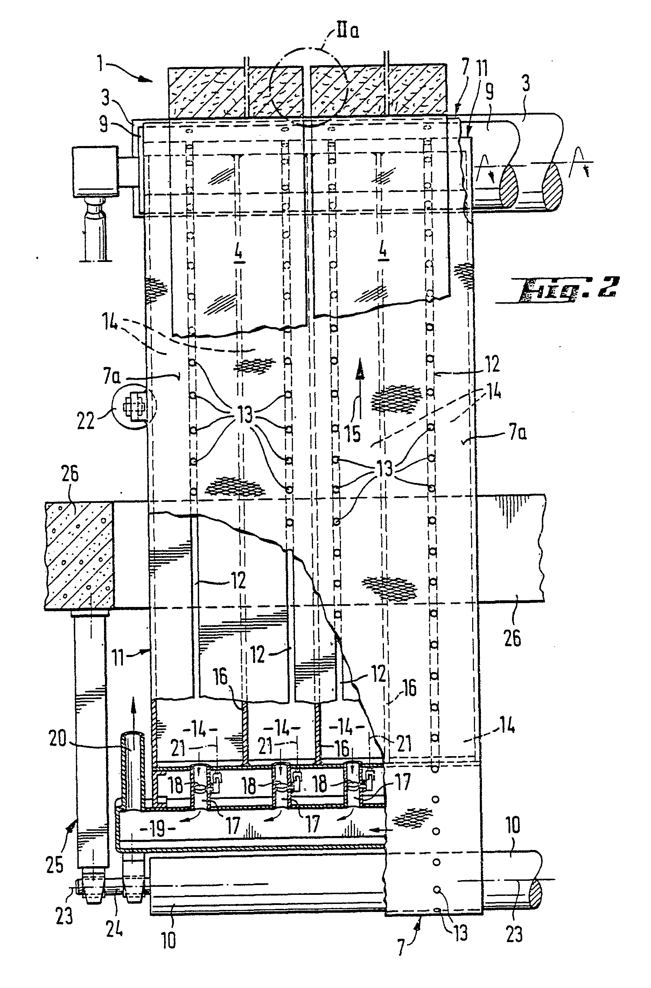

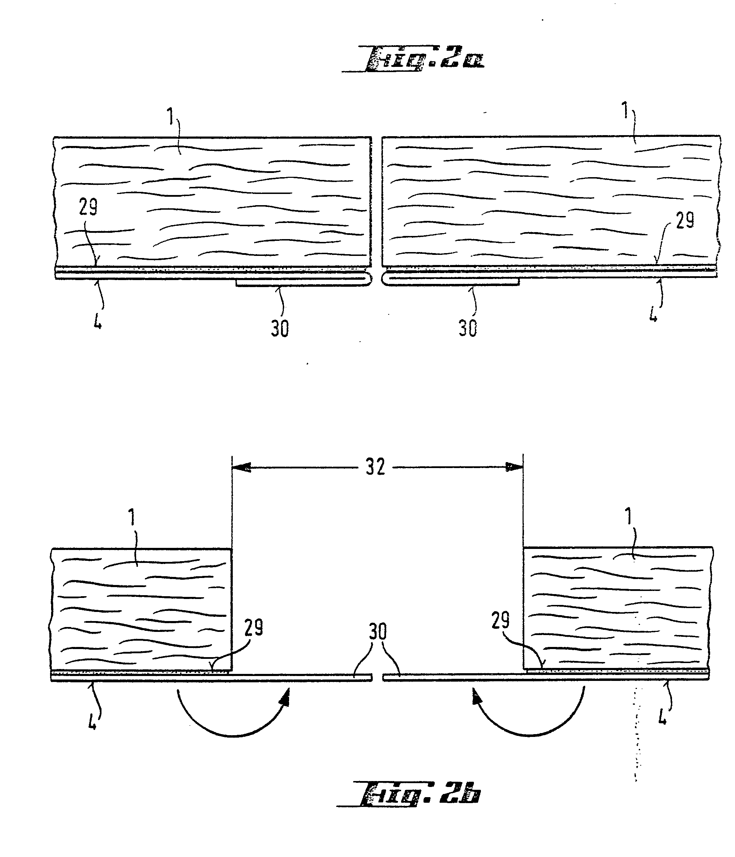

D'autre part, comme on le voit par le dessin, la nappe repose simplement sur le côté supérieur d'un train de rouleaux 2 qui ne peut transmettre à la matière 1 que des forces de transport limitées. Même si des rouleaux ou des bandes de traction etc., aident au transport, la matière, s'il s'agit d'un feutre de fibres minérales, n'est pas capable de transmettre des forces de traction notables à la bande sans fin 4 et, dans ce cas particulier, il ne resterait, sans les mesures supplémentaires selon l'invention décrites ci-après, pas d'autre choix que de renoncer à plier cette bande avant le point de jonction 5 pour ne rabattre les marges vers l'intérieur que sur le produit doublé, ce qui exige des moyens supplémentaires appréciables. En particulier, on applique généralement côte à côte, sur plusieurs bandes de matière 1, jusqu'à quatre bandes sans fin 4, séparées au préalable par une coupe longitudinale (deux sont représentées sur la figure 2) de sorte que la présence de marges s'écartant de chaque côté sur le produit doublé, en aval du point de jonction 5, obligerait à augmenter nettement l'espacement mutuel des différentes bandes de produit, comme on le voit en 32 (figure 2b), ce qui rend la fabrication plus coûteuse.

Selon l'invention, le pliage s'effectue, de manière en elle-même connue, dès la sortie du poste de déroulement dont les bobines de réserve contiennent des bandes non pliées et en particulier avant l'application d'adhésif 29 de sorte que la surface se revêt d'adhésif sans que les bandes marginales en reçoivent (figure 1b). A la suite de l'application d'adhésif et du séchage préparatoire, la bande sans fin 4 arrive de la façon représentée dans la région de l'appareil qui, selon l'invention, présente un châssis porteur d'une courroie transporteuse sans fin tournante 7 maintenue tendue au moyen d'un rouleau compensateur 8 entre un rouleau d'entraînement supérieur 9 et un rouleau de renvoi inférieur 10. Sur le brin opposé au rouleau compensateur 8, la courroie transporteuse 7 traverse une zone de transport 7a où elle longe la face frontale d'une boîte d'aspiration 11 porteuse d'ouvertures d'aspiration en forme de fentes 12 (voir figure 2) dans l'alignement desquelles la courroie transporteuse 7 présente des rangées de trous 13 (figure 1c), ici des trous ayant un diamètre d'environ 8 mm. Une dépression engendrée dans la boîte d'aspiration 11 de façon non représentée plus précisément peut ainsi aspirer l'air ambiant à travers les rangées de trous 13, puis les ouvertures d'aspiration 12. Comme le montre la figure 2, la boîte d'aspiration 11 présente plusieurs chambres 14, quatre dans le cas de l'exemple, placées côte à côte parallèlement au sens de transport de la bande sans fin 4 figuré par la flèche 15, et séparées par des cloisons 16. Chacune des chambres 14 possède une tubulure d'aspiration particulière 17 dans laquelle est disposé un organe de commande ou d'isolement, sous la forme d'un volet 18. Les tubulures d'aspiration 17 débouchent dans un conduit d'aspiration commun 19 auquel est raccordé un tuyau 20 conduisant à un générateur de dépression. D'une façon qui est encore expliquée plus précisément par la suite, des vérins à agent de pression 21 (voir figure 1) permettent de régler individuellement les volets 18.

Lorsque, les volets 18 étant ouverts, une dépression est engendrée dans la boîte d'aspiration 11, et que l'air est aspiré à travers les rangées de trous 13 de la courroie transporteuse 7, la bande sans fin 4, naturellement imperméable à l'air au moins dans une mesure suffisante, est attirée contre la surface extérieure de la courroie transporteuse 7 dans la zone de transport 7a. Il en résulte des frottements appréciables qui peuvent transmettre de la courroie transporteuse 7 à la bande sans fin 4 une traction par laquelle la courroie transporteuse 7, dans la zone de transport 7a, entraîne dans une certaine mesure la bande sans fin pour la conduire dans la région des rouleaux d'entraînement 9 au voisinage de la face inférieure de la nappe de matière 1 où sa réunion avec la matière au point de jonction 5 peut provoquer son collage. Entre le point 5 et l'extrémité du tronçon de transport 7a, dans la région de sommet du rouleau d'entraînement, seules de très petites forces de traction sont nécessaires pour éviter un pliage ou un froissement de la bande 4 tandis que la traction de travail proprement dite permettant à la plieuse de fonctionner et servant à extraire la bande du poste de déroulement freiné peut lui être appliquée par la courroie transporteuse 7.

On peut imaginer deux modes de fonctionnement différents de l'appareil selon l'invention. Ainsi d'une part on peut régler la dépression dans la boîte d'aspiration 11 de façon qu'il ne se produise qu'une pression modérée entre la bande sans fin 4 et la surface extérieure de la courroie transporteuse 7 dans la zone de transport 7a, de sorte que les tractions existantes produisent un patinage. La courroie transporteuse 7 tourne dans le sens de la flèche 15 à une vitesse supérieure à la vitesse de transport de la bande sans fin 4 ou plus grande que ne l'exigerait la vitesse de transport de la nappe 1 dans le sens de la flèche 6. La boîte d'aspiration 11 et la zone de transport 7a peuvent être maintenues fixes dans l'espace. La commande de la vitesse de traction de la bande sans fin 4 s'effectue, en principe, dans la région du point de jonction 5, par le jeu des forces de traction appliquées par la nappe de matière 1 qui tire automatiquement, par unité de temps, les longueurs correspondantes de la bande 4 ; la courroie transporteuse 7, qui court plus vite qu'elle et patine, fournit simplement une valeur de base ou seuil de la traction nécessaire, qui ne pourrait pas être transmise par la matière. En réglant convenablement la dépression, on peut établir ou régler dans chaque cas la pression de la bande 4 dans la zone de transport 7a et donc l'adhésion de façon telle que la courroie transporteuse 7 transmette, par exemple, à la bande 4 90% des forces de traction nominales nécessaires tandis que les 10 % restants sont appliqués par la matière 1. Un tel réglage peut s'employer si, lors de leurs variations, les forces de traction nécessaires ne s'abaissent jamais à moins de 90 % des forces de traction nominales même dans le cas le plus désavantageux, de sorte qu'il subsiste toujours une traction plus ou moins grande, mais limitée, dans le brin de la bande 4 situé entre le sommet du rouleau d'entraînement 9 et le point de jonction 5.

Toutefois, compte tenu des variations des forces de traction qui se produisent en pratique dans un service rude, cela veut dire qu'une part notable de ces forces doit tout de même être transmise à la bande sans fin 4 par la nappe de matière 1 ou par l'entraînement 3 de celle-ci. Des paires de rouleaux ou des bandes de traction disposés en aval du point de jonction 5 peuvent ici être utiles pour que la bande 4 se trouve pressée contre un rouleau ou une bande d'entraînement, au prix toutefois d'un effort de compression non négligeable sur la matière, ce qui est souvent indésirable.

Il est possible de régler avec plus de précision les forces agissant sur le brin compris entre le rouleau d'entraînement 9 et le point de jonction 5 si l'on adopte dans la boîte d'aspiration 1 une dépression assez élevée pour que les forces qui apparaissent empêchent la bande 4 de patiner sur la courroie transporteuse 7 dans la zone de transport 7a. Alors, la courroie transporteuse 7 entraîne dans une certaine mesure positivement la bande sans fin 4 et l'amène au point de jonction 5 de telle sorte qu'effectivement, en toutes circonstances, il n'y a plus qu'a appliquer à cette bande la faible tension nécessaire pour empêcher la formation de plis.

Toutefois, cette minimisation de l'effort de tension appliqué à la matière 1 par la bande 4 conduit à des exigences plus grandes en ce qui concerne la précision de réglage de la vitesse de déplacement de la courroie 7 car les plus petites variations peuvent conduire à une forte augmentation de la force de traction au point de jonction 5 ou à la formation de plis dans la bande 4 avant ce point de jonction 5.

Pour permettre d'effectuer ce réglage précis d'une façon aussi simple que possible, la zone de transport 7a de la courroie transporteuse 7 est rendue mobile et sollicitée élastiquement sous une certaine charge au moyen de deux vérins latéraux à air comprimé 22 agissant sur le châssis porteur de l'ensemble de la boîte d'aspiration 11 avec la courroie transporteuse tournante 7. Dans le cas de l'exemple, ce châssis est maintenu de manière à pouvoir pivoter autour de l'axe de rotation du rouleau de renvoi inférieur 11 par l'intermédiaire de paliers 23, à la façon d'un levier, sur l'arbre 24 du rouleau de renvoi lui-même monté tournant (voir figure 2) sur un bâti fixe 25.

De cette manière, comme l'illustre en tireté la figure 1, on arrive à ce que le rouleau d'entraînement supérieur 9, avec l'extrémité supérieure de la boîte d'aspiration 11, soit mobile presque parallèlement à la face inférieure de la nappe de matière 1, dans la direction de transport, selon la flèche 6 ou en sens opposé, une déviation d'environ 15 cm de part et d'autre de la position moyenne pouvant être permise dans le cas de l'exemple. Si alors la nappe de matière 1 court trop vite par rapport à la bande sans fin 4, l'extrémité supérieure du tronçon de transport 7 suit la traction accélérée de la bande 4, vers la droite dans le cas de l'exemple, tandis que si la vitesse de transport de la nappe devient plus basse que celle de la bande, il s'effectue une déviation vers la gauche du dessin, donc à l'envers du sens de transport selon la flèche 6. On peut détecter cette déviation à l'aide d'un palpeur connu en soi par l'intermédiaire de la position de la tige de piston du vérin à pression d'air 22, de la pression de celui-ci ou d'une autre façon et transformer cette mesure en un ordre de commande qui fait en conséquence courir la courroie transporteuse 7 plus vite ou plus lentement pour annuler la déviation. Ainsi, l'ensemble du châssis porteur de la courroie transporteuse 7 agit à la façon d'un rouleau compensateur et dans le brin supérieur de la bande 4, avant d'arriver au point de jonction 5, n'agit plus qu'une force de traction résultant de la force élastique, qui peut être très faible, des vérins pneumatiques 22.

Dans le cas de l'exemple, le poste de déroulement se trouve, comme l'indique un plancher 26, dans un étage situé en dessous du plan de transport de la nappe de matière 1 ou de sa chaîne de production, de sorte qu'au démarrage de la production, la bande sans fin 4 doit tout d'abord être guidée vers le haut sur une hauteur de 3 m par exemple. Cela aussi est notablement facilité par l'appareil selon l'invention puisque, lorsque la dépression est établie, il n'y a plus qu'à appliquer l'extrémité antérieure de la bande sans fin 4 contre la courroie transporteuse 7, à l'extrémité amont de la zone de transport 7a et qu'elle peut alors être transportée automatiquement vers le haut par la courroie transporteuse 7, le frein pourra être desserré au poste d'enroulement pour qu'initialement des forces de traction moindres suffisent à la dérouler. Dans la région du rouleau de renvoi inférieur 10 peuvent être prévus plusieurs palpeurs non représentés, par exemple sous la forme de barrières photoélectriques etc., qui enregistrent la présence de la bande 4 dans cette région et, en cas d'absence de cette bande, cassent la dépression dans la chambre 14 correspondante en fermant son volet 18. Une telle corrélation entre différents palpeurs et différentes chambres 14 est recommandée en particulier dans le cas où une ou plusieurs chambres 14 placées côte à côte sont affectées à une bande sans fin déterminée 4, parmi plusieurs bandes 4 transportées côte à côte. On peut ainsi s'assurer, sans autre intervention, qu'il ne s'effectue aucune aspiration dans une région en largeur de la boîte aspirante 11 qui ne transporte aucune bande. Si ensuite on applique contre cette région l'extrémité d'une bande 4, la présence de celle-ci est détectée par le palpeur et la dépression est immédiatement restaurée à une valeur préréglée par ailleurs, de sorte que la nouvelle bande est transportée vers le haut. Abstraction faite de là possibilité de transporter plusieurs bandes parallèles, par exemple quatre, devant la boîte d'aspiration 11, la subdivision de celle-ci en plusieurs chambres 14 dont la pression peut être commandée individuellement offre la possibilité de régler avec précision la dépression dans les chambres respectives et d'engendrer un profil de dépression désiré sur la largeur de la boîte d'aspiration 11 si cela apparaît nécessaire.

La vitesse d'entraînement du rouleau d'entraînement 9 de la courroie transporteuse 7 est réglée, par l'intermédiaire d'une transmission à rapport réglable représentée en 27, dans un rapport fixe avec la vitesse d'entraînement de la nappe de matière, captée dans le cas de l'exemple sur le train de rouleaux entraîné 3. Comme on l'a déjà expliqué plus haut, on peut envisager un rapport de 1:1, donc sans patinage, ou bien un rapport de 1,2:1 par exemple entre la vitesse de la courroie transporteuse 7 et celle de la matière 1, donnant un patinage. Lorsqu'on travaille avec patinage, on peut prérégler ce rapport de façon fixe pour qu'il reste égal pendant le fonctionnement, des adaptations de réglage appropriées s'effectuant par réglage de la dépression (donc des forces d'entraînement qui agissent sur la bande sans fin 4). Au rapport de 1:1 s'introduit sur la transmission réglable 27, lors d'un transport sans patinage, une régulation qui prend en compte des mouvements de la boîte d'aspiration 11, à son extrémité supérieure dans le cas de l'exemple, et qui donc, en cas de déviation vers la gauche dans la représentation selon la figure 1, diminue la vitesse de transport de la courroie transporteuse 7 par rapport à celle de la nappe de matière 1, et en cas de déviation vers la droite, l'augmente, de sorte que le rapport effectif de vitesses peut osciller constamment de façon très légère autour de la valeur de consigne de 1:1.

## Revendications

1. Procédé pour assembler, à une matière en nappe (1) transportée en continu sur une voie, au moins une bande sans fin (4) sous tension, en particulier une bande de doublage, qui se déroule contre des forces de freinage supérieures à la force de traction agissant au point de jonction sur la matière assemblée à la bande sans fin, suivant lequel on conduit la bande sans fin (4) contre une surface de transport (7) permettant le passage de l'air, à l'arrière de laquelle on engendre une dépression et qui se meut dans le sens de transport de la bande sans fin (4) à une vitesse au moins égale à la vitesse de la nappe, caractérisé en ce qu'on effectue l'assemblage en mettant en œuvre conjointement ou séparément les mesures suivantes :
— on règle la dépression à une valeur permettant un glissement entre la surface de transport (7) et la bande sans fin (4) tel que la vitesse de la surface de transport (7) soit supérieure à la vitesse de transport de la nappe de matière (1),
— on sollicite élastiquement la surface de transport (7) à la fois contre le sens de transport de la bande (4) et contre la pression de celle-ci.

2. Procédé selon la revendication 1, comprenant une sollicitation élastique de la surface de transport, caractérisé en ce que la vitesse de la surface de transport (7), dans le sens de transport de la bande sans fin (4), est maintenue égale à la vitesse de transport de la nappe de matière (1).

3. Procédé selon la revendication 2, caractérisé en ce que l'on asservit la vitesse de la surface de transport (7) à celle de la nappe de matière (1).

4. Procédé selon la revendication 4, caractérisé en ce que l'on effectue le réglage de la vitesse de la surface de transport (7) en fonction de la déviation élastique de la surface de transport.

5. Dispositif pour assembler au moins une bande sans fin (4) sous tension, en particulier une bande de doublage, à une matière en nappe (1) transportée en continu sur une voie, dans lequel la bande sans fin (4) se déroule à partir d'un poste de déroulement équipé d'un frein, selon lequel une courroie transporteuse sans fin (7), permettant le passage de l'air, est guidée et peut être entraînée en rotation le long d'une zone de transport (7a) comprenant une boîte d'aspiration (11) présentant dans la direction de transport des ouvertures d'aspiration (12), la face opposée de la courroie transporteuse (7) servant ainsi à transporter la bande sans fin (4) aspirée à son contact, la zone de transport (7a) étant disposée au moins partiellement entre le poste de déroulement et le point de jonction (5), en particulier dispositif de mise en œuvre du procédé selon les revendications 1 à 4, caractérisé en ce que la boîte d'aspiration (11) est maintenue dans une position réglable du côté opposé à la zone de transport (7a).

6. Dispositif selon la revendication 5, caractérisé en ce que le maintien de la boîte d'aspiration (11) est élastique.

7. Dispositif selon l'une des revendications 5 ou 6, caractérisé en ce que pour le maintien est prévu au moins un vérin pneumatique (22).

8. Dispositif selon l'une des revendications 5 à 7, caractérisé en ce qu'il comporte un palpeur (28) servant à détecter la position de la boîte d'aspiration (11), en particulier la course de déploiement du vérin pneumatique (22) et dont le signal de sortie commande un système de correction de la vitesse de rotation de la courroie transporteuse (7).

9. Dispositif selon l'une des revendications 5 à 8, caractérisé en ce que la boîte d'aspiration (11) est montée de manière à pouvoir pivoter autour d'un axe (23) placé parallèlement aux génératrices des surfaces de transport (2, 7a) et perpendiculaire aux directions de transport (flèches 6 et 15).

10. Dispositif selon les revendications 5 à 9, caractérisé en ce que la boîte d'aspiration (11) est subdivisée en plusieurs chambres (14) placées côte à côte parallèlement au sens de transport (flèche 15), dont la dépression peut être réglée et en particulier coupée individuellement.

11. Dispositif selon l'une des revendications 5 à 10, caractérisé en ce que, dans la région de l'extrémité amont de la zone de transport (7a), est disposé au moins un palpeur qui détecte la présence d'une bande sans fin (4) et qui, en cas d'absence, engendre un signal de coupure de dépression.

## Claims

1. Process of applying at least one endless band (4) under tension, in particular a band of lining, to a material in the form of a sheet (1) transported continuously over a track, which band is unwound against braking forces which are greater than the force of traction acting at the point where the endless band meets the material to which it is applied, according to which the endless band (4) is carried against a transporting surface (7) which permits the passage of air and behind which a vacuum is produced and which moves in the sense of transport of the endless band (4) at a velocity at least equal to the velocity of the sheet, characterised in that the application is achieved by putting into operation the following measures, either jointly or separately :

— the vacuum is adjusted to a value which allows for sliding between the surface of transport (7) and the endless band (4) so that the velocity of the surface of transport (7) may be greater than the velocity of transport of the sheet of material (1),

— the surface of transport (7) is urged elastically both against the sense of transport of the band (4) and against the pressure of said band.

2. Process according to claim 1, comprising an elastic action on the surface of transport, characterised in that the velocity of the surface of transport (7) in the sense of transport of the endless band (4) is kept equal to the velocity of transport of the sheet of material (1).

3. Process according to claim 2, characterised in that the velocity of the surface of transport (7) is adjusted to that of the sheet of material (1).

4. Process according to claim 4, characterised in that the velocity of the surface of transport (7) is controlled according to the elastic deflection of the surface of transport.

5. Apparatus for applying at least one endless band (4) under tension, in particular a lining band, to a sheet of material (1) which is continuously transported along a track, in which the endless band (4) is unwound from an unwinding station equipped with a brake, according to which an endless conveyor belt (7) allowing for the passage of air is guided and may be rotated along a zone of transport (7a) comprising a suction box (11) having suction openings (12) in the direction of transport, the opposite surface of the conveyor belt (7) thus serving to transport the endless band (4) which is sucked into contact with it, the zone of transport (7a) being arranged at least partially between the unwinding station and the point of meeting (5), in particular an apparatus for carrying out the process according to claims 1 to 4, characterised in that the suction box (11) is maintained in an adjustable position on the side opposite to the zone of transport (7a).

6. Apparatus according to claim 5, characterised in that the suction box (11) is held elastically.

7. Apparatus according to one of the claims 5 or 6, characterised in that at least one pneumatic jack (22) is provided as holding means.

8. Apparatus according to one of the claims 5 to 7, characterised in that it comprises a feeler (28) serving to detect the position of the suction box (11), in particular the degree of extension of the pneumatic jack (22), the output signal of which feeler (28) controls a system correcting the speed of rotation of the conveyor belt (7).

9. Apparatus according to one of the claims 5 to 8, characterised in that the suction box (11) is mounted to pivot about an axis (23) extending parallel to the generatrices of the surfaces of transport (2, 7a) and perpendicular to the directions of transport (arrows 6 and 15).

10. Apparatus according to claims 5 to 9, characterised in that the suction box (11) is subdivided into several chambers (14) placed side by side parallel to the direction of transport (arrow 15), the vacuum of which may be adjusted and in particular cut off individually.

11. Apparatus according to one of the claims 5 to 10, characterised in that at least one feeler which detects the presence of an endless band (4) and which produces a signal for cutting the vacuum in the event of absence of said band is provided in the region of the upstream end of the zone of transport (7a).

**Patentansprüche**

1. Verfahren zum Zusammenführen wenigstens einer Zugkräfte übertragenden Endlosbahn (4), insbesondere einer Kaschierbahn, mit einem kontinuierlich auf einer Bahn geförderten flächigen Gut (1), wobei die Endlosbahn gegen eine Bremskraft abgewickelt wird und in dem mit der Endlosbahn zusammengeführten Gut an der Zusammenführungsstelle eine Zugkraft wirkt, wobei die Bremskraft größer ist als die Zugkraft, bei dem die Endlosbahn (4) in Anlage an eine einen Luftdurchtritt ermöglichende Förderfläche (7) geführt wird, an deren der Endlosbahn abgewandten Rückseite ein Unterdruck erzeugt wird und die sich in Zuführrichtung der Endlosbahn (4) mit einer Geschwindigkeit bewegt, die mindestens gleich der Geschwindigkeit des flächigen Gutes ist, dadurch gekennzeichnet, daß das Zusammenführen durch die folgenden Maßnahmen einzeln oder in Kombination herbeigeführt wird :
— Regelung des Unterdrucks auf einen Wert, der ein Gleiten zwischen der Förderfläche (7) und der Endlosbahn (4) derart erlaubt, daß die Bewegungsgeschwindigkeit der Förderfläche (7) größer ist als die Fördergeschwindigkeit des flächigen Gutes (1),
— federnde Belastung der Förderfläche (7) gegen die Förderrichtung der Endlosbahn (4) und zugleich gegen deren Andruckkraft.

2. Verfahren nach Anspruch 1, mit einer federnden Belastung der Förderfläche, dadurch gekennzeichnet, daß die Bewegungsgeschwindigkeit der Förderfläche (7) in Förderrichtung der Endlosbahn (4) gleich gehalten wird der Fördergeschwindigkeit des Gutes (1).

3. Verfahren nach Anspruch 2, dadurch gekennzeichnet, daß die Regelung der Bewegungsgeschwindigkeit der Förderfläche (7) in Abhängigkeit von jener des Gutes (1) vorgenommen wird.

4. Verfahren nach Anspruch 4, dadurch gekennzeichnet, daß die Regelung der Bewegungsgeschwindigkeit der Förderfläche (7) in Abhängigkeit von der Federauslenkung der Förderfläche vorgenommen wird.

5. Vorrichtung zum Zusammenführen wenigstens einer Zugkräfte übertragenden Endlosbahn (4), insbesondere einer Kaschierbahn, mit einem kontinuierlich auf einer Bahn geförderten flächigen Gut (1), bei dem die Endlosbahn (4) von einer bremsbaren Abwickelstation abläuft, gemäß dem ein endloser, einen Luftdurchtritt ermöglichender Fördergurt (7) über ein Sauggehäuse (11) mit zu einem Förderabschnitt (7a) hin offenen Saugöffnungen (12) geführt und umlaufend antreibbar ist, wobei die dem Fördergurt (7) abgewandte Seite zur Förderung der dort angesaugten Endlosbahn (4) dient, wobei der Förderabschnitt (7a) zumindest teilweise zwischen der Abwickelstation und der Zusammenführungsstelle (5) angeordnet ist, insbesondere Vorrichtung zur Durchführung des Verfahrens nach den Ansprüchen 1 bis 4, dadurch gekennzeichnet, daß das Sauggehäuse (11) an der dem Förderabschnitt (7a) gegenüberliegenden Seite lageeinstellbar abgestützt ist.

6. Vorrichtung nach Anspruch 5, dadurch gekennzeichnet, daß die Abstützung des Sauggehäuses (11) federnd ausgebildet ist.

7. Vorrichtung nach einem der Ansprüche 5 oder 6, dadurch gekennzeichnet, daß zur Abstützung wenigstens ein Druckluftzylinder (22) vorgesehen ist.

8. Vorrichtung nach einem der Ansprüche 5 bis 7, dadurch gekennzeichnet, daß sie einen Stellungsfühler (28) für die Lage des Sauggehäuses (11), insbesondere den Ausfahrweg des Druckluftzylinders (22) aufweist, dessen Ausgangssignal ein Korrektursystem für die Umlaufgeschwindigkeit des Fördergurtes (7) steuert.

9. Vorrichtung nach einem der Ansprüche 5 bis 8, dadurch gekennzeichnet, daß das Sauggehäuse (11) um eine parallel zu den Mantellinien der Förderflächen (2, 7a) und quer zu den Förderrichtungen (Pfeile 6 und 15) liegende Achse (23) schwenkbar gelagert ist.

10. Vorrichtung nach den Ansprüchen 5 bis 9, dadurch gekennzeichnet, daß das Sauggehäuse (11) in mehrere, in Förderrichtung (Pfeil 15) parallel nebeneinander angeordnete Kammern (14) unterteilt ist, deren Unterdruck einzeln einstellbar, insbesondere absperrbar ist.

11. Vorrichtung nach einem der Ansprüche 5 bis 10, dadurch gekennzeichnet, daß im Bereich des in Förderrichtung vorderen Endes des Förderabschnittes (7a) wenigstens ein Fühler angeordnet ist, der das Vorliegen einer Endlosbahn (4) erfaßt und der bei Fehlen ein Unterdruck-Abschaltsignal erzeugt.

*Fig. 1c*

*Fig. 1*

*b-b*

*Fig. 1b*    *Fig. 1a*

Fig. 2

Fig. 2a

Fig. 2b